(19) **Europäisches Patentamt / European Patent Office / Office européen des brevets**

(11) **EP 1 465 748 B1**

(12) **EUROPEAN PATENT SPECIFICATION**

(45) Date of publication and mention
of the grant of the patent:
**15.10.2008 Bulletin 2008/42**

(21) Application number: **02793718.4**

(22) Date of filing: **19.12.2002**

(51) Int Cl.:
***B23Q 15/18*** *(2006.01)* ***B23Q 11/00*** *(2006.01)*

(86) International application number:
**PCT/SE2002/002418**

(87) International publication number:
**WO 2003/051575 (26.06.2003 Gazette 2003/26)**

(54) **METHOD AND SYSTEM FOR COMPENSATING THERMAL DISTORTION IN AN INDUSTRIAL ROBOT SYSTEM**

VERFAHREN UND SYSTEM ZUM AUSGLEICH VON THERMISCHEN VERFORMUNGEN AN INDUSTRIEROBOTERSYSTEMEN

PROCEDE POUR UN SYSTEME DE ROBOT INDUSTRIEL

(84) Designated Contracting States:
**AT BE BG CH CY CZ DE DK EE ES FI FR GB GR IE IT LI LU MC NL PT SE SI SK TR**

(30) Priority: **19.12.2001 SE 0104320**

(43) Date of publication of application:
**13.10.2004 Bulletin 2004/42**

(73) Proprietor: **ABB AB**
**721 83 Västerås (SE)**

(72) Inventor: **JONSSON, Ingvar**
**S-723 49 Västeras (SE)**

(74) Representative: **Reyier, Ann-Mari et al**
**Bjerkéns Patentbyra KB**
**Box 128**
**721 05 Västeras (SE)**

(56) References cited:
**EP-A1- 0 687 522** **EP-A2- 0 567 765**
**US-A- 4 719 830** **US-A- 5 581 467**

• **PATENT ABSTRACTS OF JAPAN & JP 03 079 256 A (HITACHI SEIKO CO LTD) 24 June 1991**

**Description**

TECHNICAL FIELD

The invention relates to a method for controlling an industrial robot system comprising at least one manipulator with control equipment including a processor where the manipulator comprises at least one mechanical structural part including a drive unit, which during operation generates an amount of energy loss varying with time. The invention also relates to a computer program product which, when being executed, brings the processor to carry out the steps of the method.

BACKGROUND ART

An industrial robot system comprises a manipulator with control equipment. A typical manipulator comprises a plurality of arms, which by means of a drive system are rotatable about respective movement axes. The speeds and accelerations of the axes are controlled by the robot control system, which provides control signals to the robot drive system. The drive system comprises one motor and one gear box per movement axis. When the robot is in operation, heating of motors and gear boxes takes place because of the losses that arise through electromagnetic energy conversion. The losses result, inter alia, in local heating and hence local expansion of the material in the manipulator. Local thermal expansion of the material at one or more locations in the manipulator entails, in its turn, local deformations of the structure of the manipulator, which are referred to as thermal deformations in the following. The thermal deformations cause, inter alia, a deterioration of the robot precision and hence of the robot performance.

The task of a robot is to follow a given path in space and to stop at points along the path. By accuracy in the following is meant the deviation that is always present between the desired path/point and the actual position of the robot. The magnitude of the robot's accuracy is determined by the deviation, where a comparatively high accuracy corresponds to a comparatively small deviation. From this follows that a low accuracy is due to a comparatively large deviation. During manufacture, a robot is mounted and calibrated with a certain predetermined precision and is then given a corresponding accuracy, which is dependent on a given temperature.

An industrial robot included in a robot system operates in repetitive work cycles and, depending on the application, is given a certain accuracy, which in the following is referred to as repetition accuracy.

For a robot to be able to operate with an extra high repetition accuracy, measuring transducers, arranged at one or more locations in the surrounding room, are used today. The robot seeks out the respective measuring transducer and measures given points in the room, whereupon the robot is calibrated more or less completely in relation to these reference points. This takes place while production is in progress at relatively close intervals. The duration of the intervals depends on the load of the application on the robot and the subsequent heating due to the loss powers as well as the requirement for repetition accuracy. The robot is calibrated regularly according to the above and in this way the effect of the thermal deformations may be reduced as required. The method requires extra peripheral equipment and also costs process time.

The development of industrial robots proceeds, inter alia, towards applications involving higher precision, which are based on robots with a high repetition accuracy. For example, one part of this development is directed towards measuring robots for measuring with high accuracy of three-dimensional bodies, and another part of the development is directed towards robots for machining with high accuracy, for example laser cutting.

In an application involving measurement by means of a measuring robot, the need to reach measuring points inside spaces and narrow passages often arises. One possible development route is therefore to achieve space-saving industrial robots. Another development route for achieving this is to compress a robot cell, in which one or more robots are included. One possible way to achieve this is to minimize the peripheral equipment of the robot in the cell.

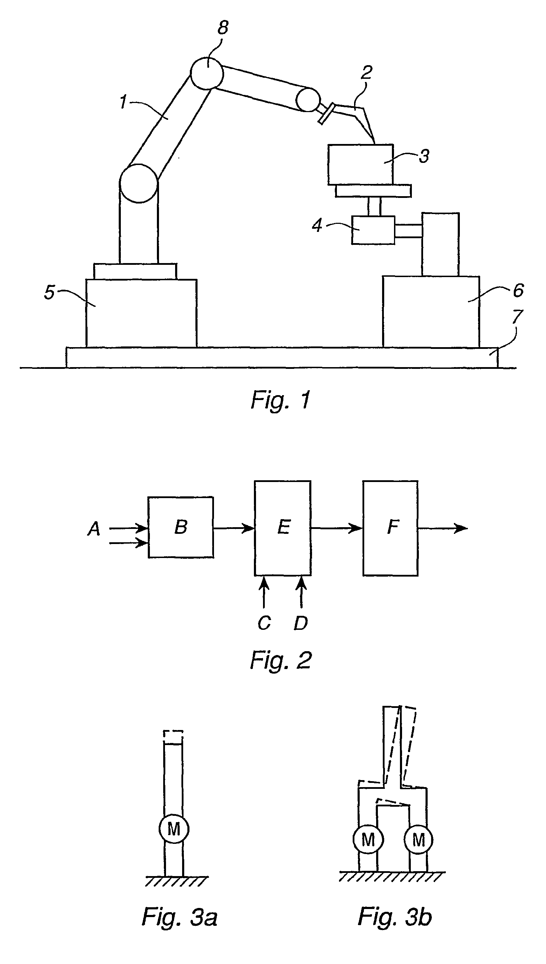

One development route is directed towards space-saving measuring robots, which look like general industrial robots (Figure 1). The determination space-saving robot means a robot which, with its tool, is capable of passing narrow and often angled passages and which is capable of reaching far into spaces without running the risk of getting stuck on its way in or out.

The repetition accuracy of an industrial robot is dependent, inter alia, on the accuracy of the components included and on the inherent precision during assembly of the robot according to the above, as well as on the surrounding temperature and on the working temperature of the robot itself, that is on the application. A generally expressed need in industry is that industrial robots should have a non-varying repetition accuracy.

As mentioned above, problems arise during operation of an industrial robot because of internal heating of the robot, where the heat primarily emanates from the gear boxes and electric motors included in the manipulator of the robot. A local temperature increase somewhere in a manipulator leads to a local thermal expansion of the material. This leads to the manipulator being locally deformed, which results in a deformation that influences the geometry of the whole robot. The repetition accuracy of the robot is changed/reduced, which influences the whole industrial robot system in which the robot is included. The determination industrial robot system here means one or more robots with control systems, tools, fixtures, base plates and workpieces. The fixtures are either fixed or movable. Alternatively, also the fixtures are in the form of robots.

Taken together, what is stated above calls forth the need of a method that allows an industrial robot in a robot system to have a non-varying repetition accuracy, without spending expensive process time on repeated calibrations. This need includes the need of keeping the repetition accuracy of the robot at a high and non-varying level in spite of internal local changes of temperature.

When manufacturing an industrial robot system of the above-mentioned kind, there is also a need to obtain an industrial robot that is inexpensive to manufacture and does not require expensive peripheral equipment. The robot should be compact, for example without an external cooling system and without a plurality of transducers for calibration of the robot.

US 4,719,830 discloses a method and an apparatus for controlling the heat deformation of a structural part of a machine by measuring the temperature of the structural part and maintaining a constant temperature of the part by either heating or cooling the part dependent on the measured temperature. The heating of the part is achieved by a plurality of heating means mounted on or inside the structural part. A disadvantage with this method and apparatus is that it requires mounting of additional hardware for measuring the temperature and for heating the structure.

SUMMARY OF THE INVENTION

The object of the present invention is to maintain, in an industrial robot system defined as above, during operation, a high and non-varying repetition accuracy, defined as above. The object is further to maintain the high and non-varying repetition accuracy while at the same time taking into account local temperature increases in the structural parts included in the system as well as heat conduction both within and between the structural parts.

These objects are achieved according to a first aspect of the present invention by a method for an industrial robot system comprising the features of claim 1, and according to a second aspect by an industrial robot system comprising the features of claim 5.

The solution according to the first aspect of the invention achieves this object by a method in an industrial robot system comprising at least one manipulator with control equipment where the manipulator comprises at least one structural part comprising a drive unit. During operation, the drive unit generates an amount of loss energy varying with time, which entails a thermal deformation of the structural part varying over time, and hence a varying displacement of the working point of the system.

The determination structural part means any/all of: the parts of the robot, fixtures for workpieces, tools, workpieces, base plates for fixtures and robot.

In an industrial robot defined as above, one or more production units with one or more industrial robots are included.

It is part of the inventive concept that the thermal deformation be chosen to correspond to the maximum thermal load during a work cycle.

It is also part of the inventive concept to choose the thermal deformation so as to correspond to the basic calibration of the robot.

The inventive concept comprises measuring the temperature. An alternative is to determine the temperature based on experiences from previous operations and information about the amount of the energy supplied.

It is part of the inventive concept that the adjustment be carried out by supplying extra thermal energy. The method according to the invention thus comprises determining how much extra thermal energy that needs to be added in order to adjust the working point to the desired position according to the above.

The inventive concept comprises influencing the above-mentioned defined thermal deformations by adding extra thermal power with the aid of existing units in the robot system. The inventive concept comprises carrying out the method solely with the aid of components present in the robot system.

In one embodiment of the invention, local temperature increases in various parts of a robot system are estimated based on the loss powers delivered from the actuators included in the system. The estimation is based on experiences from test runs of the robot concerned.

If a motor included in a structural part is used for generating loss powers, this takes place by reducing the efficiency of the motor. For a synchronous motor, such as an actuator, the efficiency is controlled by changing the angle between the magnetic field vectors of the stator and the rotor. For an asynchronous motor, the efficiency is controlled by changing the rotor current via the changed slip.

It is part of the inventive concept to calculate the losses based on the measured or required motor current (or torque) in an electric drive motor in a manipulator. The calculated losses consists, inter alia, of resistive losses, so-called copper losses, eddy-current losses and friction losses, where also losses in gear boxes and joints are taken into consideration. In a preferred embodiment of the invention, extra heat is added via the actuator included in the system by reducing the initially high efficiency in the actuator to a certain extent, whereby supply of thermal energy because of larger loss powers occurs. Based on the total motor current (measured or calculated from torque references) and with the aid of a first algorithm, the heat emission to the surroundings is calculated. The calculation provides a mean value over a time interval. When the temperature increase decreases, extra heat is supplied to keep the temperature constant and hence the thermal deformations constant.

An example of a first iterative algorithm is:

$$i(k) = f(M(k), \eta)$$

$$\Delta T(k) = k1 \cdot i(k)^2 + k2 \cdot |v(k)| + k3 \cdot v(k)^2 - k4 \cdot \Delta T(k-1)$$

$$\eta = f(\Delta T, \Delta T_{chosen})$$

| | |
|---|---|
| k : | sampling instant |
| $\Delta T$ : | temperature increase (deformation), |
| $\Delta T_{chosen}$: | desired temperature increase (desired deformation), |
| v : | motor speed, |
| M : | motor torque, |
| $\eta$ : | motor efficiency, |
| kx : | empirical constants, |
| i : | motor current. |

It is also part of the inventive concept that the whole of, or parts of, the extra thermal power be supplied with the aid of special heating elements.

It is also part of the inventive concept that the displacement of the position of the working point, according to the above, is performed by a kinematic adjustment to thus minimize the deviation in position. By the determination kinematic adjustment is meant adjustment of the parameters included in a kinematic model, for example an increased arm's length due to expansion caused by a temperature increase in a robot structure that is measured with respect to the temperature. A kinematic model of a robot describes the relation between motor angles and the position of a load in Cartesian coordinates in space. The model includes parameters that describe the appearance of the structure, for example arm's lengths and mechanical couplings between structural parts.

The thermal deformations in the respective structural parts of a robot system are determined based on the measured or estimated temperature, the geometrical structure, the coefficient of material expansion etc. and by adjusting the position of the robot. The power losses of the motor are estimated continuously and with the aid of a second algorithm the deviation in position is calculated and the deformation is compensated to a pre-selected level according to the above. Here, the calculation is dependent on the time constant for the diffusion of the heat in the material, and the calculation hence provides the temperature increase during a certain time interval.

An example of a second algorithm is:
segment j

$$i(k) = f(M(k), \eta)$$

$$\Delta Tj(k) = k1j \cdot i^2 \ (k) + k2j \ | \ v(k) \ | + k3j \cdot v^2 \ (k) -$$

$$k4j \cdot \Delta Tj \ ( \ k - 1 \ ) + \Sigma \ k5ij \ (\Delta Ti \ (k-1) - \Delta Tj(k-1) \ )$$

$$\Delta uj(k) = k6j \cdot \Delta Tj \ (k)$$

$$\Delta uj \ chosen(k) = k6j \cdot \Delta Tj \ chosen \ (k)$$

$\Delta T$ : temperature increase in a segment of a robot structure,

$\Delta T$chosen : predetermined temperature increase in a segment of a robot structure,

i : motor current,

v : motor speed,

kx : empirical constants,

j : segment number,

N : number of segments,

$\Delta uj$: deformation in the segment,

$\Delta u_{j \ chosen}$ (k) - $\Delta uj$ (k) for all the segments, is fed into some form of coordinate transformation to compensate for the current deviation and obtain a thermal deformation which attains the same value as that of the theoretical, predetermined deformation.

It is also part of the inventive concept that the adjustment of the working point be carried out by a combination of adjustment through supply of heat and adjustment through kinematic adjustment.

The inventive concept comprises determining, in a robot system, the actual thermal deformations defined according to the above and hence supplying additional heat in a robot, included in the system, in accordance with the first algorithm as described above. If the robot is changed during operation, it is possible to compensate for the change arisen with the aid of calculations in accordance with the second algorithm as described above. In simplified terms, this may be expressed such that a rough adjustment takes place by supplying heat according to the first algorithm. If this is not sufficient, fine adjustment is made by a kinematic adjustment according to the second algorithm.

The inventive concept also comprises starting the robot in advance in order to increase its temperature before, and reduce the thermal deformations at the start of, the production. During downtime, the temperature is maintained by running a non-torque-producing maintenance current. The inventive concept thus comprises keeping the temperature constant during downtime in order to avoid cooling of the robot.

It is also part of the inventive concept to determine the actual thermal deformations in accordance with the independent method claim. Thereafter, the influence of the deformations is adjusted according to the first of the above-mentioned algorithms locally in part of a robot/a robot system while at the same time the corresponding influence in another part of the robot is adjusted locally according to the second of the above-mentioned algorithms.

The inventive concept comprises transferring measured temperature values in a wireless manner from the robot to the control system by, for example, a local wireless network comprising a unit that is marketed under the name of Bluetooth.

The solution according to the second aspect of the invention is to provide an industrial robot system comprising a manipulator with control equipment including a processor. The manipulator comprises at least one mechanical structural part comprising a unit that during operation generates an amount of thermal energy varying with time, which results in a varying thermal deformation in the structural part. The system comprises a first calculating unit for calculating the power loss in the unit, a temperature sensor for measuring the ambient temperature and the temperature of the robot structure, respectively, a second calculating unit with a thermal model, and a third calculating unit for calculating the thermal deformations. The solution according to the second aspect of the invention fulfils the need to manage an adjustment of the working point without requirements for extra peripheral equipment.

According to the inventive concept, one or more calculating units are integrated into the same unit. In one embodiment of the invention, the unit consists of a Bluetooth unit.

The solution according to the third aspect of the invention is a computer program product which is loaded directly into an internal memory associated with a processor, comprising sequential instructions, and which comprises software code portions for carrying out the steps of the method according to the invention when being run by the processor. This means that the invention includes a computer program product comprising instructions for influencing the processor to keep the thermal deformation in the structural part at a chosen constant level by displacing the working point. The invention also includes providing the above-mentioned computer program product at least partly over a network such as the Internet.

The inventive concept comprises using the method according to the invention or an industrial robot system according to the invention for applications requiring high precision, for example for laser machining.

When determining the working point and indirectly the thermal deformation, the work cycle in question is run once. This work cycle constitutes a reference cycle representing the cycle that during normal running provides the greatest thermal deformation and hence the warmest robot. During the reference cycle, currents and speeds are measured in at least one of the motor units included in the robot.

Starting from the above-mentioned measurements, a mean value of the energy that heats the structure is calculated with the aid of a thermal model, and the mean value is stored.

According to a preferred embodiment of the method, the chosen thermal deformation is maintained constant during production by controlling the thermal losses to the same mean level as during the first reference cycle.

Currents and speeds are measured continuously during the operational process of the robot and a thermal model continuously calculates the energy that heats the structure. During periods where a robot is at rest or running in less power-demanding paths, a thermal model results in a loss energy that is lower than the mean value of the loss energy of the reference cycle. Via the thermal model, the efficiency of the motor concerned is reduced, whereby the loss energy increases to the extent that the mean value of the loss energy is maintained constant. This presupposes that the formation of the mean value is short compared with the time constant for the thermal deformation.

According to an advantageous embodiment of the method, the chosen thermal deformation is maintained constant during production by controlling the thermal losses to the same mean level as during the first reference cycle.

By using a thermal model that takes into account, for example, how the temperature is spread in the structural parts included in the robot and the quantity of mass that is heated, the robot is heated comparatively quickly to its working point by supplying a comparatively large amount of energy to the robot directly when starting operation according to the above.

It is part of the inventive concept that the thermal deformation is chosen to be valid for a suitable time interval, which are preferably those time intervals of a work cycle during which the robot is most loaded, the loss energy is high and hence also the temperature and the thermal deformation. The inventive concept comprises choosing the thermal deformation to lie at an optional level, and hence the above-mentioned choices of thermal deformation constitute advantageous levels for an industrial robot in operation.

BRIEF DESCRIPTION OF THE DRAWING

The invention will be explained in greater detail by description of embodiments with reference to the accompanying drawing, wherein

Figure 1 shows an industrial robot system according to the invention,
Figure 2 is a block diagram of one embodiment of the invention,
Figures 3a and 3b show examples of application of one embodiment of the present invention,
Figure 4 is a diagram showing energy losses imparted to the structure and caused by the work cycles of a robot, as a function of time,
Figure 5 is a diagram showing that the temperature of the structure is kept constant over time by supplying a varying amount of energy,
Figure 6 is a diagram showing the temperature in the robot structure as a function of time with a pre-selected temperature Tchosen introduced therein,
Figure 7 is a diagram showing the deformation of the robot structure as a function of time,
Figure 8 is a block diagram of an alternative embodiment of the invention,
Figure 9 is an example of an application of an alternative embodiment of the present invention,
Figure 10 is a diagram showing energy losses imparted to the structure and caused by the work cycles of a robot, as a function of time,
Figure 11 is a diagram showing the temperature in the robot structure as a function of time with the chosen temperature T introduced therein,
Figure 12 is a diagram showing the thermal deformation of the robot structure as a function of time.

DESCRIPTION OF THE PREFERRED EMBODIMENT

Figure 1 shows an industrial robot system comprising a first robot manipulator 1 mounted on a foot 5 and a tool 2 mounted on the manipulator. Further, it includes a second robot manipulator or, alternatively, a manipulator 4 mounted on a foot 6, as well as a workpiece 3. The two feet 5 and 6 are connected to a third foot, which constitutes a common base 7. The robot system also includes a control cabinet including a processor for manipulators and tools etc. (not shown). The manipulator comprises one or more actuators 8 generating heat during operation.

Figure 2 is a block diagram of one embodiment of the invention with the following units: mechanical units A, calculating unit B, temperature sensors C and D, unit E with a thermal model, and calculating unit F.

In the embodiment of the invention described in Figure 2, the following steps of the method according to the invention are carried out:

> a) input signals sent to mechanical units A that internally generate heat,
> b) unit B calculates the power loss in the respective unit A,
> c) the ambient temperature is measured by the temperature sensor C,
> d) the temperature in the whole of/parts of the structure is measured with the temperature sensor D,
> e) unit E, comprising a thermal model of the robot, estimates/calculates the temperature prevailing in the various parts A of the mechanical structure after a given time interval,
> f) unit F calculates/estimates the thermal deformations and the unit then calculates to what extent the structure is to be heated for the thermal deformations to be kept constant at a chosen level or within given limits,
> g) unit F sends output signals to heat-emitting units in the robot,
> h) the heat-emitting units in the robot generate a quantity of heat corresponding to the input signal.

It should be pointed out that all combinations of the method steps a+b or c or d are possible. The determination "unit comprising thermal model" means a unit that calculates/estimates the temperature prevailing in the various parts of the mechanical structure. The inventive concept includes the alternative of an optimization program in the unit F taking into account the previous, current and future states of the robot system. The heat-emitting units described in method steps g) and h) consist either of units A or of external units (not shown).

In order to keep the thermal deformation at a constant, chosen level in a robot structure according to Figure 3a, in accordance with the device according to Figure 2 and the method described above, a constant working temperature is aimed at, which corresponds to that which is obtained at a maximum thermal load during a work cycle. During a cold start, maximum power will be fed in in order to reach the correct temperature, and hence the desired thermal deformation, as quickly as possible. To limit the lateral deformation in the structure in Figure 3b, the temperature in the respective structural branch is estimated. By reducing the efficiency in the motor which is under the least load, the temperature in both structural branches may be maintained equal, the lateral deformation thus being minimized or, alternatively, being maintained constant.

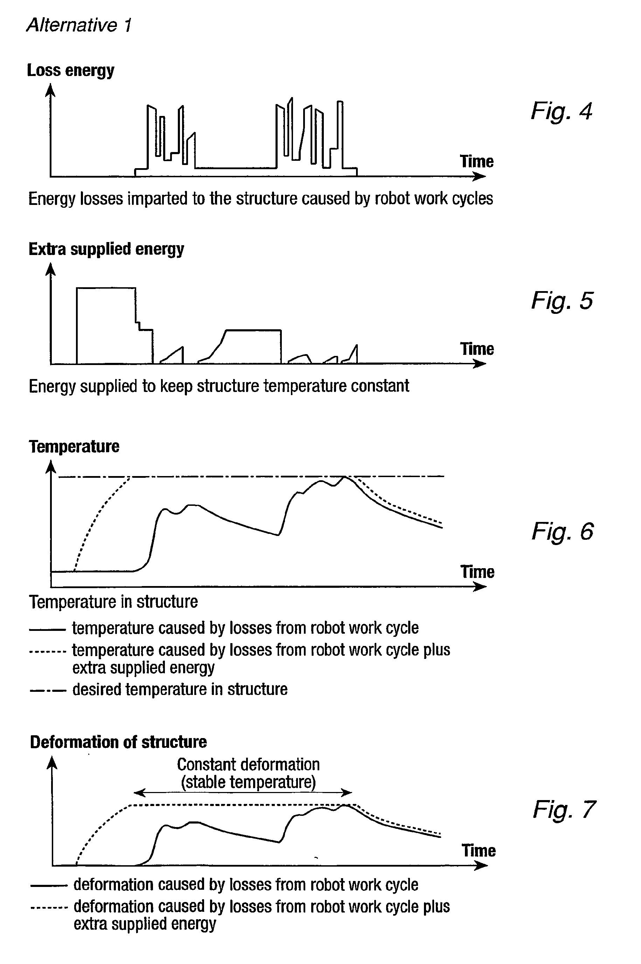

Figures 4-7 are diagrams showing the variation of various parameters during the work cycles of a robot. The parameters form the basis of the method according to the invention as shown in Figure 2. Figure 4 is a diagram showing how energy losses supplied to the structure caused by the work cycle of the robot vary with respect to time. Figure 5 is a diagram showing how the need of extra supplied energy to the structure according to Figure 4 varies with time, in order for the temperature of the structure to be constant. Figure 6 is a diagram showing how the temperature in the robot structure varies with time. The continuous line corresponds to the temperature increase in the structure caused by the losses from the work cycle of the robot. The dashed line shows the corresponding dependence for the sum of the mentioned losses plus extra supplied energy. In Figure 6, a dash-dotted line is introduced, which corresponds to the chosen temperature in the structure, which provides a chosen thermal deformation in the structure.

Figure 7 is a diagram showing how the thermal deformation in the robot structure varies with time. In the figure, the continuous line corresponds to the deformation caused by the losses from the work cycle of the robot. The dashed line corresponds to the sum of the deformation caused by the losses from the work cycle of the robot and supplied energy according to the invention. Figure 7 shows the object of the invention, namely, to reach a chosen level of the thermal deformation of the structure, which level is almost constant. Extra energy is supplied to achieve the corresponding predetermined temperature, which is normally higher than or equal to the maximum temperature caused by the losses from the work cycle of the robot.

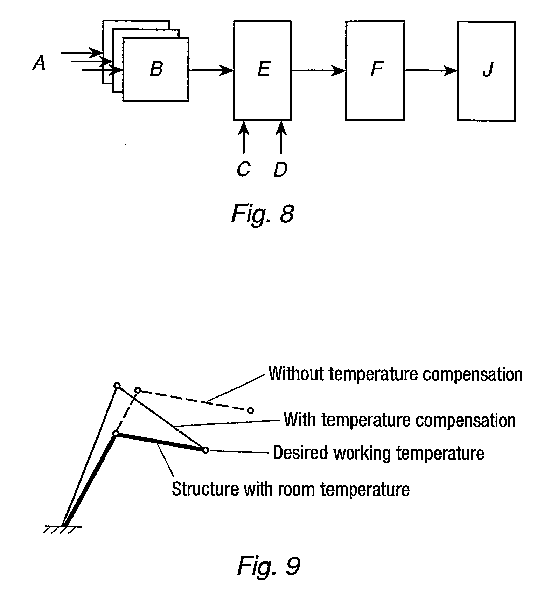

Figure 8 is a block diagram showing an alternative embodiment of the invention with the following units: mechanical units A, calculating unit B, temperature sensors C and D, unit E with a thermal model, calculating unit F and unit I with a kinematic model.

In the embodiment of the invention shown in Figure 8, the following method steps according to the invention are carried out:

> a) input signals sent to mechanical units A that internally generate heat,
> b) unit B calculates the power loss in the respective unit A,
> c) the ambient temperature is measured by the temperature sensor C,
> d) the temperature in the whole of/parts of the structure is measured with the temperature sensor D,

7

e) unit E, comprising a thermal model of the robot, estimates/calculates the temperature prevailing in the various parts A of the mechanical structure,

f) unit F calculates/estimates the thermal deformations (e.g. changes of the arm's lengths of the robot, displacements of bearings, torsions) and generates correction parameters or new parameters for a kinematic model of the structure,

i) a kinematic model (which, in addition to the robot, also includes the robot structure as an alternative).

It should be pointed out that all combinations of methods steps a+b or c or d are possible.

In an example with a robot structure with two segments (Figure 9), the device according to Figure 8, in combination with the above-mentioned alternative method, provides a temperature compensation to maintain the thermal deformation at a constant, chosen level. In Figure 9, the dash-dotted line shows the position of the segments without temperature compensation. The continuous thin line shows the position of the segments with temperature compensation. The continuous thick line shows the desired position of the segments, that is, the position at a predetermined temperature. The dash-dotted line shows the position of the segments for a cold structure at room temperature.

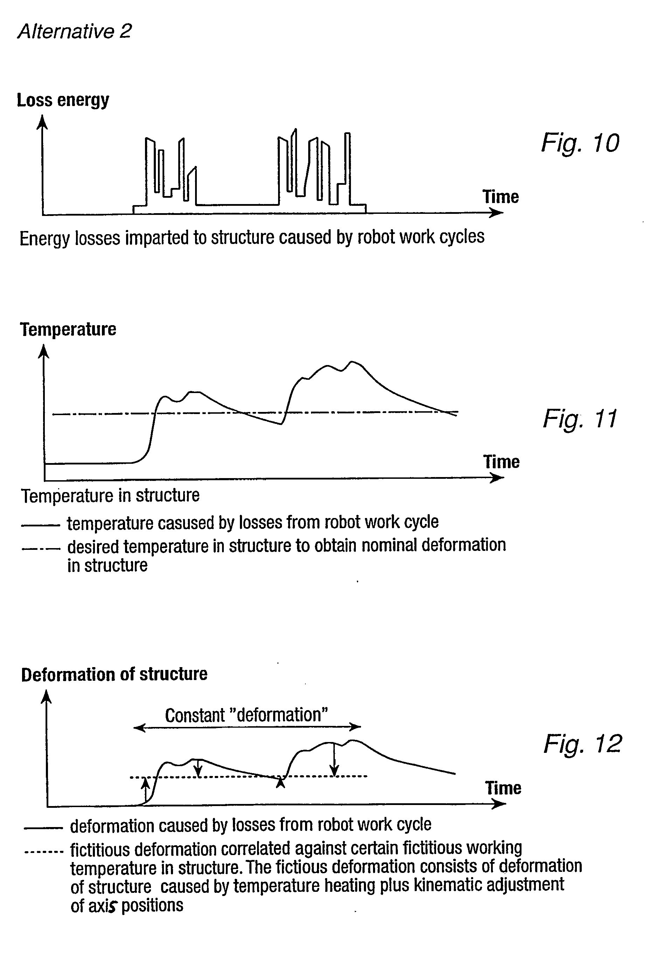

Figures 10-12 are diagrams showing the variation of different parameters during the work cycles of a robot, which form the basis of the method according to the invention as shown in Figure 8. Figure 10 shows how energy losses supplied to the robot structure caused by the work cycle of the robot vary with time. Figure 11 shows how the temperature in the structure varies with time. The continuous line shows the temperature caused by the losses from the work cycle of the robot. The dash-dotted line shows the desired temperature in the structure to attain a constant predetermined thermal deformation in the robot structure. Figure 12 shows how the thermal deformation of the structure varies with time. The continuous line shows the deformation caused by the losses from the work cycle of the robot. The dashed line shows the predetemined constant thermal deformation correlated against a certain predetermined working temperature in the structure.

This description is not to be regarded as limiting the invention but only as guidance for a full understanding of the invention. Adaptations to robot cells with other active parts included and replacement of parts and features that are self-explanatory to a person skilled in the art may, of course, be made within the scope of the invention, which is defined by the appended claims.

**Claims**

1. A method for maintaining a desired repetition accuracy in an industrial robot system comprising at least one manipulator with control equipment, wherein the manipulator includes at least one mechanical structural part (1) including a drive unit (8) and an actuator (M) which during operation generates an amount of loss energy varying with time, said loss energy after a time causing a temperature change and a corresponding thermal deformation of the structural part and hence a displacement of the working point of the system, wherein a thermal deformation ($\Delta$u chosen) is chosen to be valid for the time ($\Delta$T) and a corresponding position (P chosen) of the working point is defined, and the method comprises:

   - a thermal deformation is chosen to be valid for a certain time interval and a corresponding position of the working point is defined,
   - determining the temperature change of said structural part and a corresponding displacement ($\Delta$P1) of the working point (P) and the position (P1) of the system,
   - a displacement ($\Delta$P2) of the working point is calculated so as to correspond to an adjustment of the position of the working point from the position (P1) to the chosen position (P chosen),
   - carrying out the displacement ($\Delta$P2) and adjusting the working point to the chosen position (P chosen)by supplying extra thermal energy to said structural part,

   **characterized in that** the method further comprises generating said extra thermal energy ($\Delta$W) by reducing the efficiency of said actuator.

2. A method according to claim 1, wherein the temperature is kept constant at a temperature which corresponds to the temperature which is obtained at a maximum thermal load during a work cycle.

3. A method according to claim 1 or 2, wherein the temperature change is determined based on loss in power delivered from the actuator.

4. A method according to any of the claims 1-3, wherein said actuator is a motor.

**5.** An industrial robot system comprising a manipulator with control equipment including a processor, wherein the manipulator includes at least one mechanical structural part (1) comprising a drive unit (8) and an actuator which during operation generates an amount of loss energy varying with time, which results in a varying thermal deformation in the structural part, wherein the system comprises:

means (C,D,E) for determining the temperature change of said structural part and a corresponding displacement ($\Delta$P1) of the working point (P) and the position (P1) of the system,
a calculation unit (F) for calculating a displacement ($\Delta$P2) of the working point so as to correspond to an adjustment of the position of the working point from the position (P1) to the chosen position (P chosen),and
means for carrying out the displacement ($\Delta$P2) and adjusting the working point to the chosen position (P chosen) by supplying extra thermal energy to said structural part, **characterized in that** said means for carrying out the displacement is configured to supply said extra thermal energy ($\Delta$W) by reducing the efficiency of the actuator.

**6.** A system according to claim 5, wherein said means for determining the temperature change is adapted to calculate the amount of extra thermal energy ($\Delta$W) to be supplied to said structural part in order to keep the temperature constant at a temperature which corresponds to that which is obtained at a maximum thermal load during a work cycle.

**7.** A system according to claim 1 or 2, wherein said means for determining the temperature change is adapted to determine the temperature change based on loss in power delivered from the actuator.

**8.** A system according to any of the claims 1-3, wherein said actuator is a motor.

**9.** Use of a method according to any of claims 1-4, or an industrial robot system according to any of claims 5-8, for obtaining greater accuracy during laser machining.


**Patentansprüche**

**1.** Verfahren zum Beibehalten einer gewünschten Wiederholungsgenauigkeit in einem Industrierobotersystem mit wenigstens einem Manipulator mit Steuereinrichtung, wobei der Manipulator umfasst wenigstens ein mechanisches Bauteil (1) mit einer Antriebseinheit (8) und einen Aktuator (M), welcher während des Betriebs einen Betrag an Verlustenergie erzeugt, der über die Zeit variiert, wobei die Verlustenergie nach einer Zeit eine Temperaturveränderung und eine damit korrespondierende thermische Verformung des Bauteils und somit eine Verschiebung des Arbeitspunkts des Systems veranlasst, wobei eine thermische Verformung ($\Delta$u gewählt) für die Zeit ($\Delta$T) als zulässig gewählt wird und eine korrespondierende Position (P gewählt) des Arbeitspunkts definiert wird, und das Verfahren umfasst:

- eine thermische Verformung wird für ein bestimmtes Zeitinterwall für zulässig gewählt und eine korrespondierende Position des Arbeitspunkts wird definiert,
- Bestimmen der Temperaturveränderung des Bauteils und einer korrespondierenden Verschiebung ($\Delta$P1) des Arbeitspunkts (P) und der Position (P1) des Systems,
- eine Verschiebung ($\Delta$P2) des Arbeitspunkts wird so berechnet, dass diese mit einer Einstellung der Position des Arbeitspunkts von der Position (P1) in die gewählte Position (P gewählt) korrespondiert,
- Ausführen der Verschiebung ($\Delta$P2) und Einstellen des Arbeitspunkts auf die gewählte Position (P gewählt) durch Zuführen zusätzlicher Wärmeenergie zu dem Bauteil,

**dadurch gekennzeichnet, dass** das Verfahren ferner umfasst ein Erzeugen der zusätzlichen Wärmeenergie ($\Delta$W) durch Verringern des Wirkungsgrades des Aktuators.

**2.** Verfahren nach Anspruch 1, in welchem die Temperatur konstant auf einer Temperatur gehalten wird, welche der Temperatur entspricht, die bei einer maximalen Wärmelast während eines Arbeitszyklus erhalten wird.

**3.** Verfahren nach Anspruch 1 oder 2, in welchem die Temperaturveränderung basierend auf einem Verlust an einer vom Aktuator gelieferten Leistung bestimmt wird.

**4.** Verfahren nach einem der Ansprüche 1 bis 3, in welchem der Aktuator ein Motor ist.

**5.** Industrierobotersystem mit einem Manipulator mit Steuereinrichtung, die einen Prozessor enthält, wobei der Manipulator wenigstens ein mechanisches Bauteil (1) mit einer Antriebseinheit (8) und einen Aktuator umfasst, der während eines Betriebs einen Betrag an Verlustenergie erzeugt, der mit der Zeit variiert, was zu einer veränderlichen thermischen Verformung in dem Bauteil führt, wobei das System umfasst:

eine Einrichtung (C, D, E) zum Bestimmen der Temperaturveränderung des Bauteils und einer korrespondierenden Verschiebung ($\Delta$P1) des Arbeitspunkts (P) und der Position (P1) des Systems,
eine Berechnungseinheit (F) zum Berechnen einer Verschiebung ($\Delta$P2) des Arbeitspunkts, derart, dass diese mit einer Einstellung der Position des Arbeitspunkts von der Position (P1) in die gewählte Position (P gewählt) korrespondiert, und
eine Einrichtung zum Ausführen der Verschiebung ($\Delta$P2) und Einstellen des Arbeitspunkts in die gewählte Position (P gewählt) durch Zuführen von zusätzlicher Wärmeenergie zu dem Bauteil, **dadurch gekennzeichnet, dass** die Einrichtung zum Ausführen der Verschiebung so konfiguriert ist, dass diese die zusätzliche Wärmeenergie ($\Delta$W) durch Reduzieren des Wirkungsgrades des Aktuators zuführt.

6. System nach Anspruch 5, in welchem die Einrichtung zum Bestimmen der Temperaturveränderung so ausgebildet ist, dass diese die Menge der zusätzlichen Wärmeenergie ($\Delta$W) berechnet, die dem Bauteil zugeführt werden muss, um die Temperatur konstant auf einer Temperatur zu halten, welche derjenigen entspricht, die bei einer maximalen Wärmelast während eines Arbeitszyklusses erhalten wird.

7. System nach Anspruch 1 oder 2, in welchem die Einrichtung zum Bestimmen der Temperaturveränderung so ausgebildet ist, dass diese die Temperaturveränderung basierend auf einem Verlust von einer vom Aktuator gelieferten Leistung bestimmt.

8. System nach einem der Ansprüche 1 bis 3, in welchem der Aktuator ein Motor ist.

9. Verwendung eines Verfahrens nach einem der Ansprüche 1 bis 4, oder eines Industrieroboterssystems nach einem der Ansprüche 5 bis 8 zum Erhalten einer größeren Genauigkeit während einer Laserbearbeitung.

**Revendications**

1. Procédé permettant de maintenir une précision de répétition désirée dans un système de robot industriel comprenant au moins un manipulateur muni d'un équipement de contrôle, dans lequel le manipulateur inclut au moins une partie structurale mécanique (1) comprenant une unité d'entraînement (8) et un organe d'actionnement (M) qui lors du fonctionnement génère une quantité de perte d'énergie variant au cours du temps, ladite perte d'énergie, après un certain temps, provoquant une variation de température et une déformation thermique correspondante de la partie structurale et par conséquent un déplacement du point de travail du système, une déformation thermique ($\Delta$u choisie) étant choisie de manière à être valide pendant la durée ($\Delta$T) et une position correspondante (P choisie) du point de travail étant définie, et le procédé comprend les étapes suivantes :

- une déformation thermique est choisie pour être valide pour un certain intervalle de temps et une position correspondante du point de travail est définie,
- déterminer le changement de température de ladite partie structurale et un déplacement correspondant ($\Delta$P1) du point de travail (P) et la position (P1) du système,
- un déplacement ($\Delta$P2) du point de travail est calculé de manière à correspondre à un ajustement de la position du point de travail depuis la position (P1) à la position choisie (P choisie),
- effectuer le déplacement ($\Delta$P2) et ajuster le point de travail dans la position choisie (P choisie) en fournissant de l'énergie thermique supplémentaire à ladite partie structurale,

**caractérisé en ce que** le procédé comprend en outre l'étape consistant à générer ladite énergie thermique supplémentaire ($\Delta$W) en réduisant l'efficacité dudit organe d'actionnement.

2. Procédé selon la revendication 1, dans lequel la température est maintenue constante à une température qui correspond à la température qui est obtenue à une charge thermique maximale pendant un cycle de travail.

3. Procédé selon la revendication 1 ou la revendication 2, dans lequel le changement de température est déterminé en fonction d'une perte de la puissance délivrée par l'organe d'actionnement.

**4.** Procédé selon l'une quelconque des revendications 1 à 3, dans lequel ledit organe d'actionnement est un moteur.

**5.** Système de robot industriel comprenant un manipulateur muni d'un équipement de contrôle comprenant un processeur, dans lequel le manipulateur inclut au moins une partie structurale mécanique (1) comprenant une unité d'entraînement (8) et un organe d'actionnement qui lors du fonctionnement génère une quantité de perte d'énergie variant au cours du temps, laquelle a comme conséquence une déformation thermique variable dans la partie structurale, le système comprenant :

des moyens (C, D, E) permettant de déterminer le changement de température de ladite partie structurale et un déplacement correspondant ($\Delta$P1) du point de travail (P) et de la position (P1) du système, une unité de calcul (F) permettant de calculer un déplacement ($\Delta$P2) du point de travail afin de correspondre à un ajustement de la position du point de travail depuis la position (P1) à la position choisie (P choisie), et des moyens permettant d'effectuer le déplacement ($\Delta$P2) et d'ajuster le point de travail dans la position choisie (P choisie) en fournissant de l'énergie thermique supplémentaire à ladite partie structurale, **caractérisé en ce que** lesdits moyens permettant d'effectuer le déplacement sont configurés pour délivrer ladite énergie thermique supplémentaire ($\Delta$W) en réduisant l'efficacité de l'organe d'actionnement.

**6.** Système selon la revendication 5, dans lequel lesdits moyens permettant de déterminer le changement de température sont adaptés pour calculer la quantité d'énergie thermique supplémentaire ($\Delta$W) à fournir à ladite partie structurale de manière à maintenir la température constante, à une température qui correspond à celle qui est obtenue à une charge thermique maximale pendant un cycle de travail.

**7.** Système selon la revendication 1 ou la revendication 2, dans lequel lesdits moyens permettant de déterminer le changement de température sont adaptés pour déterminer le changement de température en fonction d'une perte de la puissance délivrée à partir de l'organe d'actionnement.

**8.** Système selon l'une quelconque des revendications 1 à 3, dans lequel ledit organe d'actionnement est un moteur.

**9.** Utilisation d'un procédé selon l'une quelconque des revendications 1 à 4, ou d'un système de robot industriel selon l'une quelconque des revendications 5 à 8, pour l'obtention d'une plus grande précision lors d'un usinage laser

Fig. 1

Fig. 2

Fig. 3a

Fig. 3b

*Alternative 1*

**Loss energy**

*Fig. 4*

Energy losses imparted to the structure caused by robot work cycles

**Extra supplied energy**

*Fig. 5*

Energy supplied to keep structure temperature constant

**Temperature**

*Fig. 6*

Temperature in structure

———— temperature caused by losses from robot work cycle

------ temperature caused by losses from robot work cycle plus extra supplied energy

—·— desired temperature in structure

**Deformation of structure**

Constant deformation
(stable temperature)

*Fig. 7*

———— deformation caused by losses from robot work cycle

------ deformation caused by losses from robot work cycle plus extra supplied energy

Fig. 8

Without temperature compensation

With temperature compensation

Desired working temperature

Structure with room temperature

Fig. 9

*Alternative 2*

**Loss energy**

*Fig. 10*

Energy losses imparted to structure caused by robot work cycles

**Temperature**

*Fig. 11*

Temperature in structure

———— temperature casused by losses from robot work cycle

—·—· desired temperature in structure to obtain nominal deformation
in structure

**Deformation of structure**

Constant "deformation"

*Fig. 12*

———— deformation caused by losses from robot work cycle

------ fictitious deformation correlated against certain fictitious working
temperature in structure. The fictious deformation consists of deformation
of structure caused by temperature heating plus kinematic adjustment
of axis positions

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4719830 A